# EUROPÄISCHE PATENTANMELDUNG

(11) **EP 1 470 963 A2**
(43) Veröffentlichungstag der Anmeldung: **27.10.2004**
(21) Anmeldenummer: 04009292.6
(22) Anmeldetag: 20.04.2004
(51) Int. Cl.: B60R 16/02, H02J 7/14

(54) **Elektrisches Bordnetz mit Brennstoffzelle und Verfahren zum Betreiben eines elektrischen Verbrauchers in einem solchen Bordnetz**

(30) Priorität: 22.04.2003 DE 10318172
(71) Anmelder: Webasto AG, 82131 Stockdorf (DE)
(72) Erfinder: Boltze, Matthias, 17039 Neuendorf (DE); Wunderlich, Christian, 09114 Chemmitz (DE)
(74) Vertreter: Bedenbecker, Markus

(57) **Zusammenfassung**

Die Erfindung betrifft ein elektrisches Bordnetz, insbesondere für ein Kraftfahrzeug, mit einer APU ("Auxiliary Power Unit") auf Brennstoffzellenbasis und einem DC/DC-Wandler (12) zur Wandlung der von der Brennstoffzelle (10) erzeugten Gleichspannung, um diese an die Bordnetzspannung anzupassen.

Erfindungsgemäß ist vorgesehen, dass ein Teil der von der Brennstoffzelle (10) gelieferten elektrischen Energie ohne Wandlung durch den DC/DC-Wandler (12) mindestens einem elektrischen Verbraucher (14) zugeführt wird.

Die Erfindung betrifft weiterhin ein Verfahren zum Betreiben eines elektrischen Verbrauchers (14) mit elektrischer Energie.

## Beschreibung

Die Erfindung betrifft ein elektrisches Bordnetz, insbesondere für ein Kraftfahrzeug, mit einer APU ("Auxiliary Power Unit") auf Brennstoffzellenbasis und einem DC/DC-Wandler zur Wandlung der von der Brennstoffzelle erzeugten Gleichspannung, um diese an die Bordnetzspannung anzupassen.

Die Erfindung betrifft weiterhin ein Verfahren zum Betreiben eines elektrischen Verbrauchers mit elektrischer Energie, die von einer APU ("Auxiliary Power Unit") auf Brennstoffzellenbasis geliefert wird, wobei ein DC/DC-Wandler zur Wandlung der von der Brennstoffzelle erzeugten Gleichspannung vorgesehen ist, um diese an die Bordnetzspannung anzupassen.

In modernen Kraftfahrzeugen besteht zunehmend ein erhöhter Bedarf an elektrischer Energie, zum Beispiel zur Bereitstellung von Komfortfunktionen, beispielsweise einer Standklimatisierung. Aus diesem Grund ist vorgesehen, die Bordnetze der Kraftfahrzeuge mit Zusatzaggregaten zur Lieferung elektrischer Energie auszustatten. In diesem Zusammenhang erweisen sich APUs ("Auxiliary Power Units") auf Brennstoffzellenbasis als besonders vielversprechend, da diese unabhängig vom Verbrennungsmotor elektrische Energie erzeugen und liefern können.

Da der Spannungsbereich dieser Brennstoffzellen lastabhängig zwischen ca. 60 % und 100 % der Maximalspannung des Bordnetzes variiert, ist es erforderlich, die gelieferte Spannung über einen DC/DC-Wandler an die Bordnetzspannung anzupassen. Beispiele derartiger Bordnetze mit einer Brennstoffzelle und einem zur Spannungskonditionierung vorgesehenen DC/DC-Wandler sind beispielsweise in der DE 198 10 556 C1, der DE 101 05 087 A1 und der DE 198 10 468 A1 angegeben.

Der erhöhte elektrische Leistungsbedarf in modernen Kraftfahrzeugen bringt jedoch im Hinblick auf die genannte Technologie Probleme mit sich. Bei einer beispielhaften elektrischen APU-Leistung um 5 kW ist es erforderlich, einen sehr aufwendigen und damit kostenintensiven DC/DC-Wandler einzusetzen, um die Brennstoffzellenspannung auf die Bordnetzspannung zu stabilisieren. Hinzu kommt, dass derartige Wandler gegenwärtig noch nicht verfügbar sind und erst entwickelt werden müssen, was zwar grundsätzlich möglich ist, jedoch wiederum mit sehr hohem Aufwand und Kosten verbunden wäre.

Der Erfindung liegt die Aufgabe zugrunde, die Probleme des Standes der Technik zu beseitigen und insbesondere ein elektrisches Bordnetz sowie ein Verfahren zum Betreiben eines elektrischen Verbrauchers zur Verfügung zu stellen ohne darauf angewiesen zu sein, bei hoher elektrischer APU-Leistung einen hierfür geeigneten DC/DC-Wandler zu entwickeln.

Diese Aufgabe wird mit den Merkmalen der unabhängigen Ansprüche gelöst.

Besonders bevorzugte Ausführungsformen der Erfindung sind in den abhängigen Ansprüchen angegeben.

Die Erfindung baut auf dem gattungsgemäßen elektrischen Bordnetz dadurch auf, dass ein Teil der von der Brennstoffzelle gelieferten elektrischen Energie ohne Wandlung durch den DC/DC-Wandler mindestens einem elektrischen Verbraucher zugeführt wird. Die in dem DC/DC-Wandler an die Bordnetzspannung angepasste Leistung wird auf ein wirtschaftlich sinnvolles Maß beschränkt, indem solchen Verbrauchern, die mit einer unstabilisierten Spannung arbeiten können, eine solche ohne DC/DC-Wandlung zugeführt wird.
Die Erfindung ist in besonders nützlicher Weise dadurch weitergebildet, dass die Brennstoffzelle an einen Eingang des DC/DC-Wandlers angeschlossen ist, so dass die gesamte von der Brennstoffzelle gelieferte nutzbare elektrische Energie diesem Eingang zugeführt wird, und dass ein Teil der von der Brennstoffzelle gelieferten elektrischen Energie ohne Wandlung durch den DC/DC-Wandler einem unkonditionierten Ausgang des DC/DC-Wandlers entnommen werden kann. Auf diese Weise ist es möglich, die Brennstoffzelle lediglich an den DC/DC-Wandler anzuklemmen. Es sind somit keine zusätzlichen Schaltungsmaßnahmen im Bereich der Brennstoffzelle erforderlich. Die Aufteilung der Spannung in einerseits eine stabilisierte Spannung und andererseits eine unstabilisierte beziehungsweise unkonditionierte Spannung findet im Bereich des DC/DC-Wandlers statt, indem der unstabilisierte Teil nur durch den DC/DC-Wandler durchgeleitet wird und an einem unkonditionierten Ausgang des DC/DC-Wandlers zur Verfügung gestellt wird.

Die Erfindung erweist sich dann als besonders vorteilhaft, wenn der mindestens eine Verbraucher ein Hochleistungsverbraucher ist. Indem der Hochleistungsverbraucher nicht mit einer stabilisierten Spannung betrieben wird, kann der DC/DC-Wandler für eine um ein entsprechendes Maß verkleinerte Leistung ausgelegt werden.

In diesem Zusammenhang ist es besonders vorteilhaft, dass der mindestens eine Verbraucher ein Kompressormotor eines elektrisch angetriebenen Klimakompressors einer Fahrzeugklimaanlage ist. Aufgrund der direkten Kopplung des mit Gleichspannung betriebenen Kompressormotors an die Brennstoffzellenspannung ergibt sich je nach Gesamtlast an der Brennstoffzelle ein unterschiedliches Spannungsniveau zur Versorgung des Klimakompressormotors.

Hieraus resultieren zwar wechselnde Drehzahlen des Motors, was jedoch in Kauf genommen werden kann, da die Steuerung der Kompressorleistung unabhängig von der Drehzahl über eine mechanische Anpassung des Verdichtungshubs mittels eines PWM-Signals vorgenommen werden kann.

Das erfindungsgemäße elektrische Bordnetz kann beispielsweise so ausgelegt sein, dass die elektrische Leistung der APU ca. 5 kW beträgt.

Die Erfindung baut auf dem gattungsgemäßen Verfahren dadurch auf, dass ein Teil der von der Brennstoffzelle gelieferten elektrischen Energie ohne Wandlung durch den DC/DC-Wandler mindestens einem elektrischen Verbraucher zugeführt wird. Auf diese Weise werden die Vorteile und Besonderheiten des erfindungsgemäßen Bordnetzes auch im Rahmen eines Verfahrens realisiert. Dies gilt auch für die nachfolgend angegebenen besonders bevorzugten Ausführungsformen des erfindungsgemäßen Verfahrens.

Dieses ist in besonders nützlicher Weise dadurch weitergebildet, dass die Brennstoffzelle an einen Eingang des DC/DC-Wandlers angeschlossen ist, so dass die gesamte von der Brennstoffzelle gelieferte nutzbare elektrische Energie diesem Eingang zugeführt wird, und dass ein Teil der von der Brennstoffzelle gelieferten elektrischen Energie ohne Wandlung durch den DC/DC-Wandler einem unkonditionierten Ausgang des DC/DC-Wandlers entnommen wird.

Weiterhin ist bei dem erfindungsgemäßen Verfahren vorgesehen, dass der mindestens eine Verbraucher ein Hochleistungsverbraucher ist.

Das erfindungsgemäße Verfahren ist in besonders vorteilhafter Weise dadurch weitergebildet, dass der mindestens eine Verbraucher ein Kompressormotor eines elektrisch angetriebenen Klimakompressors einer Fahrzeugklimaanlage ist.

In diesem Zusammenhang ist es besonders vorteilhaft, dass die Steuerung der Leistung des Klimakompressors unabhängig von der Drehzahl des Kompressormotors über die mechanische Ansteuerung des Verdichtungshubs erfolgt.

Weiterhin ist das Verfahren nützlich einsetzbar, wenn die elektrische Leistung der APU ca. 5 kW beträgt.

Der Erfindung liegt die Erkenntnis zugrunde, dass die Größe eines DC/DC-Wandlers auf ein wirtschaftlich sinnvolles Maß beschränkt werden kann, indem insbesondere elektrische Hochleistungsverbraucher, wie zum Beispiel elektrische Klimakompressoren, direkt mit der variablen unkonditionierten Brennstoffzellenspannung versorgt werden.

Die Erfindung wird nun mit Bezug auf die begleitenden Zeichnungen anhand besonders bevorzugter Ausführungsformen beispielhaft erläutert.

Dabei zeigt:
- Figur 1: eine schematische Darstellung eines Teils eines elektrischen Bordnetzes gemäß der vorliegenden Erfindung; und
- Figur 2: eine schematische Darstellung eines Teils eines elektrischen Bordnetzes gemäß der vorliegenden Erfindung mit einem elektrischen Verbraucher.

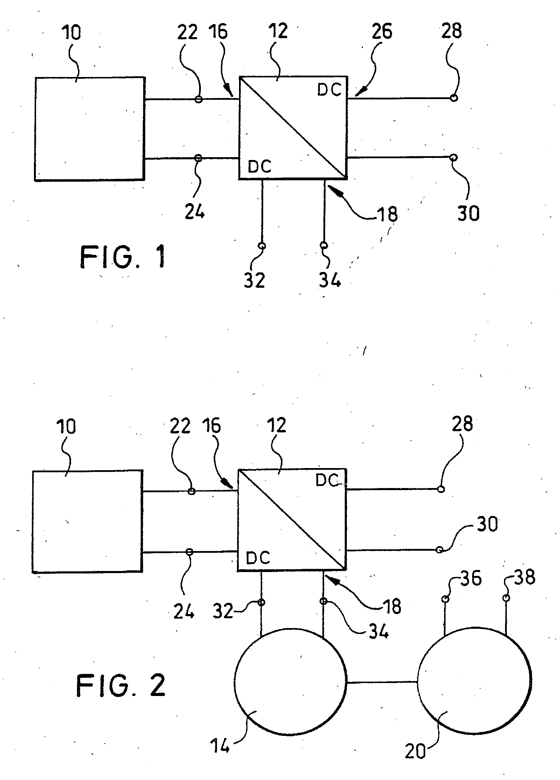

Figur 1 zeigt eine schematische Darstellung eines Teils eines elektrischen Bordnetzes gemäß der vorliegenden Erfindung. Eine Brennstoffzelle 10 ist über Eingangsklemmen 22, 24 am Eingang 16,eines DC/DC-Wandlers 12 angeschlossen. Der DC/DC-Wandler 12 hat einen stabilisierten Ausgang,26, über den er mittels Ausgangsklemmen 28, 30 eine stabilisierte Ausgangsspannung zur Verfügung stellen kann.

Zusätzlich hat der DC/DC-Wandler 12 einen unstabilisierten beziehungsweise unkonditionierten Ausgang 18, über den mittels Ausgangsklemmen 32, 34 eine unkonditionierte Spannung zur Verfügung gestellt werden kann. Die an dem stabilisierten Ausgang 26 zur Verfügung gestellte Spannung wird vorzugsweise in das Bordnetz des Kraftfahrzeugs zwecks Leistungserhöhung eingespeist.

Figur 2 zeigt eine schematische Darstellung eines Teils eines elektrischen Bordnetzes gemäß der vorliegenden Erfindung mit einem elektrischen Verbraucher 14. In Figur 2 ist zusätzlich zu der Darstellung gemäß Figur 1 ein Verbraucher 14 dargestellt, der an die Ausgangsklemmen 32, 34 des unkonditionierten Ausgangs 18 angeschlossen ist. Bei diesem Verbraucher 14 handelt es sich im vorliegenden Beispiel um einen Hochleistungsverbraucher und insbesondere um einen Kompressormotor eines Klimakompressors 20. Dieser Kompressormotor 14 kann mit den sich in Abhängigkeit der Gesamtlast an der Brennstoffzelle 10 verändernden Spannungsniveaus betrieben werden, auch wenn hierdurch die Drehzahl des Motors 14 variiert. Die Steuerung der Kompressorleistung kann unabhängig von der Drehzahl über die mechanische Anpassung des Verdichtungshubes erfolgen, indem über die Klemmen 36, 38 des Klimakompressors 20 ein PWM-Signal eingespeist wird.

Die in der vorstehenden Beschreibung, in den Zeichnungen sowie in den Ansprüchen offenbarten Merkmale der'Erfindung können sowohl einzeln als auch in beliebiger Kombination für die Verwirklichung der Erfindung wesentlich sein.

### Bezugszeichenliste

- 10: Brennstoffzelle
- 12: DC/DC-Wandler
- 14: Verbraucher / Klimakompressormotor
- 16: Eingang
- 18: unstabilisierter Ausgang
- 20: Klimakompressor
- 22: Eingangsklemme
- 24: Eingangsklemme
- 26: stabilisierter Ausgang
- 28: Ausgangsklemme
- 30: Ausgangsklemme
- 32: Ausgangsklemme
- 34: Ausgangsklemme
- 36: Ausgangsklemme
- 38: Ausgangsklemme

## Patentansprüche

1. Elektrisches Bordnetz, insbesondere für ein Kraftfahrzeug, mit
- einer APU ("Auxiliary Power Unit") auf Brennstoffzellenbasis und
- einem DC/DC-Wandler (12) zur Wandlung der von der Brennstoffzelle (10) erzeugten Gleichspannung, um diese an die Bordnetzspannung anzupassen,
**dadurch gekennzeichnet, dass** ein Teil der von der Brennstoffzelle (10) gelieferten elektrischen Energie ohne Wandlung durch den DC/DC-Wandler (12) mindestens einem elektrischen Verbraucher (14) zugeführt wird.

2. Elektrisches Bordnetz nach Anspruch 1, **dadurch gekennzeichnet,**
- **dass** die Brennstoffzelle (10) an einen Eingang (16) des DC/DC-Wandlers (12) angeschlossen ist, so dass die gesamte von der Brennstoffzelle (10) gelieferte nutzbare elektrische Energie diesem Eingang (16) zugeführt wird, und
- **dass** ein Teil der von der Brennstoffzelle (10) gelieferten elektrischen Energie ohne Wandlung durch den DC/DC-Wandler einem unkonditionierten Ausgang (18) des DC/DC-Wandlers (12) entnommen werden kann.

3. Elektrisches Bordnetz nach Anspruch 1 oder 2, **dadurch gekennzeichnet, dass** der mindestens eine Verbraucher (14) ein Hochleistungsverbraucher ist.

4. Elektrisches Bordnetz nach Anspruch 3, **dadurch gekennzeichnet, dass** der mindestens eine Verbraucher (14) ein Kompressormotor eines elektrisch angetriebenen Klimakompressors (20) einer Fahrzeugklimaanlage ist.

5. Elektrisches Bordnetz nach Anspruch 4, **dadurch gekennzeichnet, dass** die Steuerung der Leistung des Klimakompressors (20) unabhängig von der Drehzahl des Kompressormotors (14) über die mechanische Ansteuerung des Verdichtungshubs erfolgt.

6. Elektrisches Bordnetz nach einem der vorangehenden Ansprüche, **dadurch gekennzeichnet, dass** die elektrische Leistung der APU ca. 5 kW beträgt.

7. Verfahren zum Betreiben eines elektrischen Verbrauchers mit elektrischer Energie, die von einer APU ("Auxiliary Power Unit") auf Brennstoffzellenbasis geliefert wird, wobei ein DC/DC-Wandler (12) zur Wandlung der von der Brennstoffzelle (10) erzeugten Gleichspannung vorgesehen ist, um diese an die Bordnetzspannung anzupassen, **dadurch gekennzeichnet, dass** ein Teil der von der Brennstoffzelle (10) gelieferten elektrischen Energie ohne Wandlung durch den DC/DC-Wandler (12) mindestens einem elektrischen Verbraucher (14) zugeführt wird.

8. Verfahren nach Anspruch 7, **dadurch gekennzeichnet,**
- **dass** die Brennstoffzelle (10) an einen Eingang (16) des DC/DC-Wandlers (12) angeschlossen ist, so dass die gesamte von der Brennstoffzelle (10) gelieferte nutzbare elektrische Energie diesem Eingang (16) zugeführt wird, und
- **dass** ein Teil der von der Brennstoffzelle (10) gelieferten elektrischen Energie ohne Wandlung durch den DC/DC-Wandler einem unkonditionierten Ausgang (18) des DC/DC-Wandlers (12) entnommen wird.

9. Verfahren nach Anspruch 7 oder 8, **dadurch gekennzeichnet, dass** der mindestens eine Verbraucher (14) ein Hochleistungsverbraucher ist.

10. Verfahren nach Anspruch 9, **dadurch gekennzeichnet, dass** der mindestens eine Verbraucher (14) ein Kompressormotor eines elektrisch angetriebenen Klimakompressors (20) einer Fahrzeugklimaanlage ist.

11. Verfahren nach Anspruch 10, **dadurch gekennzeichnet, dass** die Steuerung der Leistung des Klimakompressors (20) unabhängig von der Drehzahl des Kompressormotors (14) über die mechanische Ansteuerung des Verdichtungshubs erfolgt.

12. Verfahren nach einem der Ansprüche 7 bis 11, **dadurch gekennzeichnet, dass** die elektrische Leistung der APU ca. 5 kW beträgt.
